# FASCICULE DE BREVET EUROPEEN

(11) **EP 0 914 213 B1**
(45) Date de publication et mention de la délivrance du brevet: **04.08.2004**
(21) Numéro de dépôt: 98925771.2
(22) Date de dépôt: 22.05.1998
(51) Int. Cl.: B05B 1/24, B60S 1/52, H05B 3/12

(54) **DISPOSITIF DE CHAUFFAGE D'UN GICLEUR**
VORRICHTUNG ZUM BEHEIZEN EINER SPRÜHDÜSE
DEVICE FOR HEATING A SPRAY NOZZLE

(30) Priorité: 23.05.1997 FR 9706348
(43) Date de publication de la demande: 12.05.1999
(73) Titulaire: SOCIETE D'ETUDES ET DE REALISATIONS INDUSTRIELLES ET COMMERCIALES SERIC, 77820 Le Chatelet en Brie (FR)
(72) Inventeur: SULYAK, Péter, H-1046 Budapest (HU); TORES, Denis, F-77005 Vaux le Penil (FR)
(74) Mandataire: Derambure, Christian
(86) Numéro de dépôt international: PCT/FR1998/001032
(87) Numéro de publication internationale: WO 1998/052695

(56) Documents cités:
- DE-A- 2 519 902
- DE-A- 3 717 574
- FR-A- 2 283 801
- GB-A- 2 193 617
- GB-A- 2 274 410
- US-A- 4 088 269
- PATENT ABSTRACTS OF JAPAN vol. 015, no. 022 (E-1024), 18 janvier 1991 & JP 02 267881 A (FUJIKURA LTD;OTHERS: 01), 1 novembre 1990

## Description

L'invention concerne un dispositif de chauffage d'un gicleur, notamment de véhicule, destiné à éjecter un liquide de lavage sur une surface extérieure, par l'intermédiaire d'au moins un orifice débouchant.

GB-A-2 274 410 montre un dispositif de chauffage d'un gicleur selon le préambule de la revendication 1.

L'invention concerne également un gicleur comportant un tel dispositif de chauffage.

Dans l'hypothèse de l'utilisation d'un tel gicleur dans l'industrie automobile, celui-ci -ou du moins la portion comportant l'orifice débouchant- est généralement situé en permanence à l'extérieur du véhicule.

Le gicleur est donc soumis directement aux intempéries.

Dans certaines conditions climatiques, celui-ci -ou du moins l'orifice débouchant- peut geler.

Un dispositif de chauffage est donc indispensable pour dégeler rapidement le gicleur, et lui permettre de fonctionner de nouveau.

Dans l'industrie automobile, sont connues deux méthodes pour dégivrer les gicleurs du type précité, afin de permettre au liquide de lavage d'y circuler librement.

Selon une première méthode, on chauffe le liquide à l'intérieur du conduit d'amenée du liquide à l'orifice, à une température largement supérieure à 0°C, par exemple entre 50 et 60°C.

Un tel chauffage est réalisé par l'intermédiaire d'un dispositif de chauffage en forme de disque, comportant une résistance variant en fonction de la température.

Ce dispositif de chauffage est réalisé en une matière mixte, à base de métal et céramique.

Cette méthode présente cependant un certain nombre d'inconvénients :
- en raison de l'emplacement particulier du dispositif de chauffage, c'est-à-dire à l'intérieur du conduit d'amenée, son alimentation est complexe, coûteuse et difficilement réalisable par soudure ;
- les dimensions et la forme du dispositif de chauffage ne permettent pas une application efficace d'un point de vue thermotechnique, d'autant plus qu'il est nécessaire de le refroidir en raison des valeurs importantes du courant devant être utilisé.

Suivant une deuxième méthode, on chauffe le gicleur, dans l'entourage de l'orifice débouchant, à une température supérieure à 0°C.

Le dispositif de chauffage utilisé est composé d'une résistance dont la valeur varie en fonction de la température, et d'une résistance de valeur fixe, les deux résistances étant montées en série.

Cette méthode présente également un certain nombre d'inconvénients, à savoir :
- pour assurer un chauffage efficace, une résistance de grande surface est nécessaire en raison de la grande charge thermique ;
- en raison du montage en série, un courant élevé est nécessaire.

Il résulte de ces principaux inconvénients, que ce dispositif de chauffage est relativement coûteux, complexe à réaliser et difficilement miniaturisable.

De ce fait, il ne peut être situé de manière suffisamment proche de l'orifice débouchant.

L'invention a donc pour but de pallier les inconvénients de l'art antérieur précité.

Elle a ainsi pour objectif d'augmenter l'efficacité du chauffage du gicleur à proximité de l'orifice débouchant, à l'aide d'un dispositif de chauffage simple et peu coûteux.

Un autre objectif de l'invention est de miniaturiser au maximum le dispositif de chauffage de manière à pouvoir le disposer le plus proche possible de l'orifice débouchant.

Un autre objectif de l'invention est de régulariser au mieux la température générée par le dispositif de chauffage.

Ainsi, la puissance de chauffage doit être la plus élevée en phase active et la quantité de chaleur nécessaire doit être engendrée le plus rapidement possible.

A cet effet, l'invention propose un dispositif de chauffage du type précité, comportant une première résistance de valeur variable et une seconde résistance de valeur fixe, la première et la deuxième résistances étant montées en parallèle sur un support et reliées à des moyens d'alimentation en tension ; la seconde résistance ayant pour fonction de stabiliser la température de chauffage du dispositif.

La valeur de la première résistance varie en fonction de la température ambiante.

Plus précisément, la première résistance est choisie de sorte que sa valeur augmente, respectivement diminue, lorsque la température ambiante ou sa propre température augmente, respectivement diminue.

Par exemple, la première résistance est une résistance du type à coefficient positif de température.

Selon l'invention, la première et seconde résistances sont des composants électroniques.

L'invention propose également un gicleur, notamment de véhicule, destiné à éjecter un liquide sur une surface de lavage extérieure par l'intermédiaire d'au moins un orifice débouchant connecté à au moins un conduit d'amenée du liquide. Le gicleur comporte une enveloppe extérieure à l'intérieur de laquelle s'étend le conduit d'amenée et à la surface de laquelle débouche l'orifice. Le gicleur comporte en outre un dispositif de chauffage du type précité.

Le dispositif de chauffage est positionné à proximité immédiate de l'orifice débouchant.

Plus précisément, il peut être positionné à l'intérieur du gicleur, en amont et proche de l'orifice débouchant.

D'autres particularités de l'invention résulteront de la description qui va suivre en référence aux dessins annexés.

La figure 1 représente le schéma électrique du dispositif de chauffage de l'invention.

La figure 2 représente une vue latérale schématique du dispositif de chauffage de l'invention.

La figure 3 représente une vue en plan schématique du dispositif de chauffage.

Les figures 4 et 5 représentent schématiquement un gicleur de l'invention comportant le dispositif de chauffage des figures 2 et 3. La figure 4 représente une vue latérale du gicleur tandis que la figure 5 représente une vue schématique de face.

L'invention est relative à un dispositif de chauffage 1 d'un gicleur 2 destiné à éjecter un liquide de lavage sur une surface extérieure, par exemple vitrée.

Dans le mode de réalisation qui va être décrit, le gicleur 2 est un gicleur pour la distribution d'un liquide, notamment pour le nettoyage d'un pare-brise, d'une lunette arrière ou d'une calotte de phare d'un véhicule.

Un tel gicleur permet généralement de déposer un liquide lave-glace sur la surface vitrée précitée dans des zones pré-établies.

Le gicleur 2 peut être situé en divers endroits, par exemple sur ou sous le capot avant, ou sur le balai de l'essuie-vitre, s'agissant d'un pare-brise.

S'agissant de la lunette arrière, le gicleur 2 peut être situé sur le pavillon du véhicule, ou sur la porte de hayon, ou sur le bras balai de l'essuie lunette, etc.

S'agissant d'un phare, le gicleur 2 peut être situé sur le bouclier avant du véhicule, ou sur la calandre ou sur le phare lui-même.

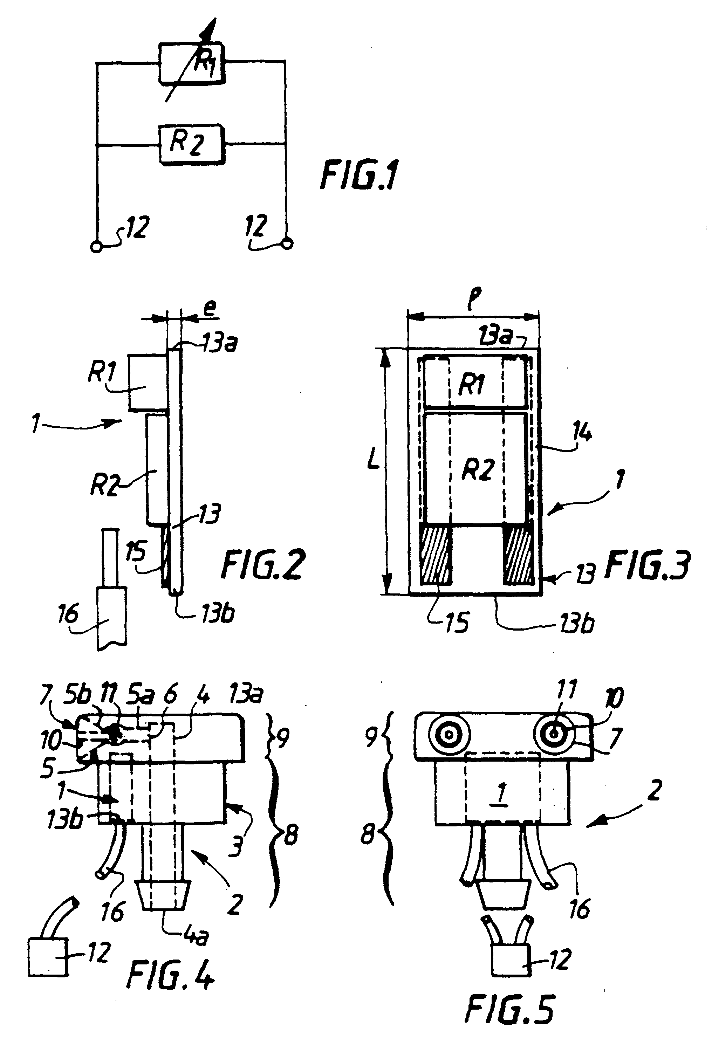

Comme représenté sur les figures 4 et 5, le gicleur 2 comprend une enveloppe extérieure 3, réalisée en matière plastique par exemple, telle que notamment du thermoplastique.

A l'intérieur de cette enveloppe extérieure 3, le gicleur 2 comprend un conduit d'amenée 4 et au moins un conduit de sortie 5.

Le conduit de sortie 5 débouche d'une part sur le conduit d'amenée 4 par l'intermédiaire d'un trou de communication 6, et d'autre part sur la surface extérieure de l'enveloppe 3, par un orifice débouchant 7.

Dans le mode de réalisation représenté, le conduit de sortie 5 s'étend sensiblement perpendiculairement au conduit d'amenée 4.

Bien entendu, on peut prévoir une pluralité de conduits de sortie 5 et un degré d'inclinaison du ou des conduits de sortie 5 par rapport au conduit d'amenée 4 différent.

Le conduit d'amenée 4 et le conduit de sortie 5 sont sensiblement rectilignes.

Le liquide est amené dans le conduit d'amenée 4 par son extrémité libre 4a, opposée au trou de communication 6.

Puis, le liquide circule dans le conduit de sortie 5 pour être expulsé par l'orifice débouchant 7.

D'une manière générale, le gicleur 2 présente sensiblement la forme d'un champignon, comportant un corps 8 et une tête 9.

Le corps 8 comprend généralement le conduit d'amenée 4, et la tête 9 comprend le conduit de sortie 5 et l'orifice débouchant 7.

Dans le mode de réalisation représenté, le corps 8 du gicleur 2 s'étend sensiblement perpendiculairement à la tête 9.

Il est entendu, qu'ils peuvent être inclinés l'un par rapport à l'autre.

Comme représenté sur la figure 4, le conduit d'amenée 4 présente une section intérieure sensiblement constante. Sa section transversale est sensiblement circulaire.

En outre, le conduit de sortie 5 présente, vers au moins l'orifice 7, une section sensiblement tronconique.

Plus précisément, le conduit de sortie 5 comporte un premier tronçon 5a de section transversale circulaire sensiblement constante, débouchant sur le trou de communication 6.

Le conduit de sortie 5 comprend en outre un deuxième tronçon 5b, attenant au premier tronçon 5a, et débouchant sur l'orifice 7.

Dans le tronçon de conduit 5b, à partir de sa jonction avec le tronçon 5a, et jusqu'à l'orifice 7, est disposé un tuyau de passage 10 du liquide.

Le tuyau de passage 10 du liquide présente une section sensiblement constante, circulaire, et de diamètre sensiblement inférieur à celui du tronçon 5a, et donc du trou de communication 6.

Suivant une variante, on peut envisager que le conduit de sortie 5 ne comporte qu'un tronçon 5b de section transversale tronconique.

Dans ce cas, le tuyau de passage 10 s'étendrait depuis le trou de communication 6.

Le tuyau de passage 10 débouche donc sensiblement au niveau de l'orifice 7.

Il comprend à son extrémité adjacente au tronçon 5a, une bille 11, en libre rotation, permettant son orientation.

La forme sensiblement tronconique du tronçon 5b permet un réglage angulaire de la bille 11.

Dans le mode de réalisation représenté, la bille 11 et éventuellement la surface délimitant l'orifice 7 sont réalisées en métal.

On comprend donc que dans certaines conditions climatiques, les bords de l'orifice 7 ainsi que la bille 11 peuvent être gelés.

Pour permettre de dégeler ces composants, le gicleur 2 comporte en outre un dispositif de chauffage 1, disposé à l'intérieur de son enveloppe 3.

En référence aux figures 1 à 3, le dispositif de chauffage 1 comprend une première résistance R1 de valeur variable et une seconde résistance R2 de valeur fixe et constante.

Comme cela est clairement représenté sur le schéma électrique de la figure 1, les résistances R1 et R2 sont disposées en parallèle l'une par rapport à l'autre.

Elles sont en outre reliées à des moyens d'alimentation en tension 12.

En vue de miniaturiser le dispositif de chauffage 1, les résistances R1 et R2 sont des composants électroniques.

Elles sont disposées toutes deux sur un même support, en l'occurence une plaque de céramique 13. La plaque 13 présente par exemple une épaisseur e de l'ordre de 0,5 mm par exemple, ainsi que d'une largeur 1 d'environ 6 mm, et d'une longueur L d'environ 8 mm.

Les résistances R1 et R2 sont reliées entre elles par une surface de conduction 14 s'étendant suivant la longueur L de la plaque 13.

Cette surface de conduction 14 est élaborée suivant la technologie à couche épaisse (*THICKFILM-TECHNOLOGY*), avec par exemple quatre points de soudure.

La résistance variable R1 est du type à coefficient positif de température (PTC).

Elle a ainsi pour caractéristique le fait que sa valeur augmente, respectivement diminue, lorsque la température ambiante ou sa propre température augmente, respectivement diminue.

Pour une tension d'alimentation de 12 à 15 Volts environ, la résistance R1 a une valeur comprise entre 30 Ohms et 1 Kilo-Ohm.

Dans le mode de réalisation représenté, la résistance R1 est à base de céramique.

En outre, la résistance R2 est élaborée suivant la technologie à couche épaisse.

Cette résistance R2 a pour fonction de stabiliser l'énergie thermique dégagée par la résistance R1.

Cette fonction est réalisée d'une part grâce à la disposition en parallèle des résistances R1 et R2, et d'autre part grâce au même support 13 de ces résistances R1 et R2.

Comme cela est clairement représenté, la première résistance R1 est située vers un bord extrême 13a de la plaque 13, tandis que la seconde résistance R2 est située sensiblement au centre de la plaque 13.

La résistance R1 est par conséquent placée en position supérieure par rapport à la résistance R2, comme cela est d'ailleurs représenté en figure 1.

La résistance R2 est également en contact, par l'intermédiaire de la surface de conduction 14, avec une surface de connexion 15, destinée à recevoir des câbles 16 pour l'alimentation en tension.

La surface de connexion 15 est donc située sensiblement vers le bord extrême 13b de la plaque 13, opposée au bord 13a.

Les câbles conducteurs 16 forment ainsi une partie des moyens d'alimentation en tension 12. Ils sont reliés à une source d'alimentation.

Chaque câble 16 est fixé au support 13, et plus précisément à la surface de connexion 15, par des moyens de fixation rigide assurant une conductibilité thermique, tels que notamment des moyens de collage, de soudure ou analogue.

Le dispositif de chauffage 1 est positionné à l'intérieur du gicleur 2 à proximité immédiate de l'orifice 7.

Plus précisément, comme cela est également représenté sur la figure 4, la plaque 13 s'étend généralement sensiblement parallèlement au conduit d'amenée 4, de sorte qu'une partie au moins de la plaque 13 -au moins celle comportant la résistance R1- se trouve dans la tête 9 du gicleur 2.

D'autre part, la plaque 13 est disposée de sorte que son bord 13a, comportant la première résistance R1, soit située en regard et le plus proche possible de la bille 11.

Le bord 13a est donc situé sensiblement en amont et proche de l'orifice 7.

Suivant un mode de réalisation particulier, le bord 13a est distant de la bille 11 sur environ 0,5 mm.

Il est entendu que le gicleur 2 comporte un espace destiné à recevoir le dispositif de chauffage 1, et s'étendant sensiblement parallèlement au conduit d'amenée 4.

Le dispositif de chauffage 1 est fixé sur les parois de cet espace de manière rigide, par exemple par des moyens de fixation assurant une conductibilité thermique, sensiblement identique à celles d'une matière thermoplastique.

Ces moyens de fixation peuvent être par exemple des moyens de collage ou de soudure.

La fixation du dispositif de chauffage 1 à l'intérieur du gicleur 2, ainsi que la fixation des câbles 16 sur le dispositif de chauffage 1 est donc assurée par une soudure ou une colle adéquate.

On comprendra que la capacité thermique des billes 11 métalliques est nettement supérieure à celle de l'enveloppe 3 en matière thermoplastique.

Ceci explique notamment le fait que la première résistance R1 se trouve en amont et à proximité immédiate de la bille 11.

Ces caractéristiques sont d'autant plus justifiées que généralement, la tête 9 du gicleur 2 est située généralement à l'extérieur de la carrosserie, tandis que son corps 8, du moins sa partie extrême libre, est située à l'intérieur de la carrosserie.

On pourrait en outre prévoir que la plaque 13 s'étende de manière sensiblement inclinée par rapport au conduit d'amenée 4, sans pour autant changer les caractéristiques techniques précitées.

De ce qui précède, on comprendra qu'en fonction de la masse du gicleur 2 et des conduits thermiques extérieurs un équilibre thermique s'établit.

Ainsi, la quantité de chaleur produite par la première résistance R1 et celle dégagée sur le gicleur 2 se retrouve en équilibre.

Deux exemples de réalisation de l'invention sont donnés ci-après.

Dans un premier exemple, la température extérieure est d'environ - 30°C et le gicleur 2 pèse entre 5 et 10 grammes.

Par ailleurs, la valeur constante de la résistance R2 est comprise entre 160 et 180 Ohms.

On constate alors que le courant de chauffage augmente tant que la quantité de chaleur produite est inférieure à la quantité totale de chaleur dégagée et absorbée par le gicleur 2.

Dans ces conditions, étant donné qu'aucune chaleur n'est engendrée sur le dispositif de chauffage 1, la valeur de la première résistance R1 reste minimum, à savoir aux environs de 30 Ohms.

Cette seconde résistance R2 qui est disposée en parallèle avec la première résistance R1, permet ainsi de stabiliser l'effet oscillant de la température.

Dans un deuxième exemple, la masse du gicleur 2 et la valeur de la seconde résistance R2 sont sensiblement identiques à celles du premier exemple.

En outre, la température extérieure est égale ou supérieure à - 5°C.

La quantité de chaleur produite est supérieure à la quantité totale de chaleur dégagée et absorbée par le gicleur 2.

Une accumulation de chaleur s'effectue donc à l'intérieur du gicleur 2.

Par conséquent, la température ambiante de la première résistance R1 augmente considérablement et sa valeur sera donc supérieure à 30 Ohms.

Dans ces conditions, le dispositif de chauffage 1 absorbe un courant moins important et le courant baisse jusqu'à ce qu'un équilibre thermique soit établi.

Cet état se conserve automatiquement, étant donné que la chaleur engendrée sur la première résistance R1 peut assurer la production continue de la quantité de chaleur nécessaire pour garder la température élevée de la résistance R1.

## Revendications

1. Dispositif de chauffage d'un gicleur, notamment de véhicule, destiné à éjecter un liquide de lavage sur une surface extérieure par l'intermédiaire d'au moins un orifice débouchant, ledit dispositif de chauffage étant destiné à être positionné dans l'entourage du gicleur, **caractérisé en ce qu'**il comporte une première résistance (R1) de valeur variable et une seconde résistance (R2) de valeur fixe, la première et la seconde résistances étant montées en parallèle sur un support et reliées à des moyens (12, 16) d'alimentation en tension ; la seconde résistance (R2) ayant pour fonction de stabiliser la température de chauffage du dispositif.

2. Dispositif de chauffage selon la revendication 1, **caractérisé en ce que** la valeur de la première résistance (R1) varie en fonction de la température ambiante.

3. Dispositif de chauffage selon la revendication 2, **caractérisé en ce que** la première résistance (R1) est choisie de sorte que sa valeur augmente, respectivement diminue, lorsque la température ambiante ou sa propre température augmente, respectivement diminue.

4. Dispositif de chauffage selon la revendication 3,
**caractérisé en ce que** la première résistance (R1) est une résistance du type à coefficient positif de température, dont la valeur varie sensiblement entre 30 Ohms et 1 Kilo-Ohm.

5. Dispositif de chauffage selon l'une quelconque des revendications 1 à 4, les première et seconde résistances (R1, R2) sont des composants électroniques.

6. Dispositif de chauffage selon l'une des revendications 1 à 5, **caractérisé en ce que** la première résistance (R1) est à base de céramique.

7. Dispositif de chauffage selon les revendications 1 à 6, **caractérisé en ce que** les première et seconde résistances (R1, R2) sont disposées sur un même support (13).

8. Dispositif de chauffage selon la revendication 7, **caractérisé en ce que** le support (13) est une plaque de céramique.

9. Dispositif de chauffage selon l'une des revendications 1 à 8, **caractérisé en ce qu'**il est alimenté avec une tension comprise sensiblement entre 12 et 15 volts.

10. Dispositif de chauffage selon l'une des revendications 1 à 9, **caractérisé en ce que** les moyens d'alimentation en tension comportent au moins un câble conducteur (16).

11. Dispositif de chauffage selon la revendication 10, **caractérisé en ce que** le ou les câbles sont fixés au support (13) des résistances (R1, R2) par des moyens de fixation rigide assurant une conductibilité thermique, tels que notamment des moyens de collage, de soudure ou analogue.

12. Gicleur, notamment de véhicule, destiné à éjecter un liquide sur une surface de lavage extérieure par l'intermédiaire d'au moins un orifice débouchant (7) connecté à au moins un conduit (4) d'amenée du liquide ; le gicleur comportant une enveloppe extérieure (3) à l'intérieur de laquelle s'étend le conduit d'amenée (4) et à la surface de laquelle débouche l'orifice (7), **caractérisé en ce qu'**il comporte un dispositif de chauffage (1) selon l'une quelconque des revendications 1 à 11.

13. Gicleur selon la revendication 12, **caractérisé en ce que** le dispositif de chauffage (1) est positionné à proximité immédiate de l'orifice débouchant (7).

14. Gicleur selon la revendication 12 ou 13, **caractérisé en ce que** le dispositif de chauffage (1) est positionné à l'intérieur du gicleur (2), en amont et proche de l'orifice débouchant (7).

15. Gicleur selon l'une des revendications 12 à 14, **caractérisé en ce que** le dispositif de chauffage (1) s'étend sensiblement parallèlement au conduit d'amenée (4) du liquide de lavage.

16. Gicleur selon l'une des revendications 12 à 15, **caractérisé en ce qu'**il comporte en outre, au niveau de l'orifice débouchant (7), au moins une bille (11) en libre rotation.

17. Gicleur selon la revendication 12 à 16, **caractérisé en ce que** la surface délimitant l'orifice débouchant (7) et, le cas échéant, la bille (11) sont réalisées en métal.

18. Gicleur selon la revendication 17, **caractérisé en ce que** son enveloppe extérieure (3) est réalisée en matière plastique, notamment thermoplastique.

19. Gicleur selon l'une des revendications 12 à 18, **caractérisé en ce que** le dispositif de chauffage (1) est fixé à l'intérieur du gicleur (2) par des moyens de fixation rigide, assurant la conductibilité thermique, tels que notamment des moyens de collage, de soudure ou analogue.

## Patentansprüche

1. Heizvorrichtung einer Spritzdüse, insbesondere eines Fahrzeugs, zum Abspritzen einer Waschflüssigkeit auf eine Außenfläche über mindestens eine Mündungsöffnung, wobei die besagte Heizvorrichtung in der Nähe der Spritzdüse positioniert werden soll, **dadurch gekennzeichnet, dass** sie einen ersten Widerstand (R1) mit variablem Wert und einen zweiten Widerstand (R2) mit festem Wert umfasst, wobei der erste und zweite Widerstand parallel auf einem Träger montiert und an Spannungsversorgungsmittel (12, 16) angeschlossen sind; wobei die Funktion des zweiten Widerstands (R2) darin besteht, die Heiztemperatur der Vorrichtung zu stabilisieren.

2. Heizvorrichtung nach Anspruch 1, **dadurch gekennzeichnet, dass** der Wert des ersten Widerstands (R1) je nach Raumtemperatur schwankt.

3. Heizvorrichtung nach Anspruch 2, **dadurch gekennzeichnet, dass** der erste Widerstand (R1) so gewählt wird, dass sich ihr Wert erhöht bzw. verringert, wenn sich die Raumtemperatur oder seine eigene Temperatur erhöht bzw. verringert.

4. Heizvorrichtung nach Anspruch 3, **dadurch gekennzeichnet, dass** der erste Widerstand (R1) ein Widerstand des Typs mit positivem Temperaturkoeffizienten ist, dessen Wert zwischen etwa 30 Ohm und 1 Kiloohm schwankt.

5. Heizvorrichtung nach einem der Ansprüche 1 bis 4, wobei der erste und zweite Widerstand (R1, R2) elektronische Komponenten sind.

6. Heizvorrichtung nach einem der Ansprüche 1 bis 5, **dadurch gekennzeichnet, dass** der erste Widerstand (R1) auf Keramikbasis ist.

7. Heizvorrichtung nach den Ansprüchen 1 bis 6, **dadurch gekennzeichnet, dass** der erste und zweite Widerstand (R1, R2) auf einem gleichen Träger (13) angeordnet sind.

8. Heizvorrichtung nach Anspruch 7, **dadurch gekennzeichnet, dass** der Träger 13 eine Keramikplatte ist.

9. Heizvorrichtung nach einem der Ansprüche 1 bis 8, **dadurch gekennzeichnet, dass** sie mit einer Spannung von etwa 12 bis 15 Volt versorgt wird.

10. Heizvorrichtung nach einem der Ansprüche 1 bis 9, **dadurch gekennzeichnet, dass** die Spannungsversorgungsmittel mindestens ein Leiterkabel (16) umfassen.

11. Heizvorrichtung nach Anspruch 10, **dadurch gekennzeichnet, dass** das oder die Kabel mit starren Befestigungsmitteln an dem Träger (13) der Widerstände (R1, R2) befestigt sind, die eine Wärmeleitfähigkeit gewährleisten, wie insbesondere Klebe- oder Schweißmittel oder dergleichen.

12. Spritzdüse, insbesondere für ein Fahrzeug, zum Abspritzen einer Flüssigkeit auf eine äußere Waschfläche über mindestens eine an mindestens einer Flüssigkeitszuleitung (4) angeschlossene Mündungsöffnung (7); wobei die Spritzdüse einen Außenmantel (3) umfasst, in dem sich die Zuleitung (4) erstreckt und an dessen Oberfläche die Öffnung (7) mündet, **dadurch gekennzeichnet, dass** sie eine Heizvorrichtung (1) nach einem der Ansprüche 1 bis 11 umfasst.

13. Spritzdüse nach Anspruch 12, **dadurch gekennzeichnet, dass** die Heizvorrichtung (1) in unmittelbarer Nähe der Mündungsöffnung (7) positioniert ist.

14. Spritzdüse nach Anspruch 12 oder 13, **dadurch gekennzeichnet, dass** die Heizvorrichtung (1) innerhalb der Spritzdüse (2), vor und in der Nähe der Mündungsöffnung (7) positioniert ist.

15. Spritzdüse nach einem der Ansprüche 12 bis 14, **dadurch gekennzeichnet, dass** sich die Heizvorrichtung (1) etwa parallel zur Zuleitung (4) der Waschflüssigkeit erstreckt.

16. Spritzdüse nach einem der Ansprüche 12 bis 15, **dadurch gekennzeichnet, dass** sie ferner in Höhe der Mündungsöffnung (7) mindestens eine frei drehbare Kugel (11) umfasst.

17. Spritzdüse nach Anspruch 12 bis 16, **dadurch gekennzeichnet, dass** die die Mündungsöffnung (7) abgrenzende Fläche und gegebenenfalls die Kugel (11) aus Metall bestehen.

18. Spritzdüse nach Anspruch 17, **dadurch gekennzeichnet, dass** ihr Außenmantel (3) aus Kunststoff, insbesondere aus Thermoplast besteht.

19. Spritzdüse nach einem der Ansprüche 12 bis 18, **dadurch gekennzeichnet, dass** die Heizvorrichtung (1) innerhalb der Spritzdüse (2) mit starren Befestigungsmitteln befestigt ist, die die Wärmeleitfähigkeit gewährleisten, wie insbesondere Klebe- oder Schweißmittel oder dergleichen.

## Claims

1. A device for heating a spray nozzle, in particular for a vehicle, intended to eject a washing liquid onto an external surface by means of at least one opening-out orifice, the said heating device being intended to be positioned around the spray nozzle, **characterised in that** it comprises a first heating element (R1) with a variable value and a second heating element (R2) with a fixed value, the first and second heating elements being mounted in parallel on a support and connected to voltage supply means (12, 16); the function of the second heating element (R2) being to stabilise the heating temperature of the device.

2. A heating device according to Claim 1, **characterised in that** the value of the first heating element (R1) varies according to the ambient temperature.

3. A heating device according to Claim 2, **characterised in that** the first heating element (R1) is chosen so that its value increases or respectively decreases when the ambient temperature or its own temperature increases or respectively decreases.

4. A heating device according to Claim 3, **characterised in that** the first heating element (R1) is an element of the positive temperature coefficient type, whose value varies substantially between 30 ohms and 1 kilohm.

5. A heating device according to any one of Claims 1 to 4, the first and second heating elements (R1, R2) are electronic components.

6. A heating device according to one of Claims 1 to 5, **characterised in that** the first heating element (R1) is based on ceramic.

7. A heating device according to Claims 1 to 6, **characterised in that** the first and second heating elements (R1, R2) are disposed on the same support (13).

8. A heating device according to Claim 7, **characterised in that** the support (13) is a ceramic plate.

9. A heating device according to one of Claims 1 to 8, **characterised in that** it is supplied with a voltage lying between approximately 12 and 15 volts.

10. A heating device according to one of Claims 1 to 9, **characterised in that** the voltage supply means comprise at least one conductive cable (16).

11. A heating device according to Claim 10, **characterised in that** the cable or cables are fixed to the support (13) for the heating elements (R1, R2) by rigid fixing means ensuring thermal conductivity, such as in particular adhesive bonding, welding or similar means.

12. A spray nozzle, in particular for a vehicle, intended to inject a liquid onto an external washing surface by means of at least one opening-out orifice (7), connected to at least one liquid supply conduit (4); the spray nozzle comprising an external casing (3) inside which there extends the supply conduit (4) and on the surface of which the orifice (7) opens out, **characterised in that** it comprises a heating device (1) according to any one of Claims 1 to 11.

13. A spray nozzle according to Claim 12, **characterised in that** the heating device (1) is positioned in the immediate vicinity of the opening-out orifice (7).

14. A spray nozzle according to Claim 12 or 13, **characterised in that** the heating device (1) is positioned inside the spray nozzle (2), upstream of and close to the opening-out orifice (7).

15. A spray nozzle according to one of Claims 12 to 14, **characterised in that** the heating device (1) extends substantially parallel to the supply conduit (4) for the washing liquid.

16. A spray nozzle according to one of Claims 12 to 15, **characterised in that** it also comprises, at the opening-out orifice (7), at least one ball (11) in free rotation.

17. A spray nozzle according to Claim 12 to 16, **characterised in that** the surface delimiting the opening-out orifice (7) and, where applicable, the ball (11) is produced from metal.

18. A spray nozzle according to Claim 17, **characterised in that** its external casing (3) is produced from plastic, in particular thermoplastic, material.

19. A spray nozzle according to one of Claims 12 to 18, **characterised in that** the heating device (1) is fixed inside the spray nozzle (2) by rigid fixing means, ensuring thermal conductivity, such as in particular adhesive bonding, welding or similar means.
